# EUROPÄISCHE PATENTANMELDUNG

(11) **EP 2 500 203 A2**
(43) Veröffentlichungstag der Anmeldung: **19.09.2012**
(21) Anmeldenummer: 12000713.3
(22) Anmeldetag: 03.02.2012
(51) Int. Cl.: B60K 17/28, B60W 10/06, B60W 10/08, B60W 10/02, B60W 20/00, B60K 6/46, B60W 30/188

(54) **Serieller Hybrid mit Nebenaggregate-Management**

(30) Priorität: 12.03.2011 DE 102011013754
(71) Anmelder: MAN Truck & Bus AG, 80995 München (DE)
(72) Erfinder: Stall, Eugen, Dr., 53819 Neunkirchen-Seelscheid (DE); Welfers, Hans Josef, Dr., 85221 Dachau (DE); John, Dennis, 81371 München (DE); Kigin, Erdogan, 73760 Ostfildern (DE)

(57) **Zusammenfassung**

Die Erfindung betrifft einen Hybridantrieb, vorzugsweise einen seriellen Hybridantrieb, für ein Fahrzeug, insbesondere Nutzfahrzeug, wobei der Hybridantrieb einen Verbrennungsmotor 3 und eine Elektromaschine 1 umfasst und wobei der Verbrennungsmotor 3 und die Elektromaschine 1 über eine Kupplung 15 miteinander verbindbar und/oder voneinander trennbar sind und zwischen der Kupplung 15 und der Elektromaschine 1 ein Abtrieb 14 ausgebildet ist, über den verbrennungsmotorische und/oder elektrische Energie zumindest einem Nebenaggregat 11 zuführbar ist. Die Erfindung betrifft ferner ein entsprechendes Betriebsverfahren.

## Beschreibung

Die Erfindung betrifft einen vorzugsweise seriellen Hybridantrieb für ein Fahrzeug, insbesondere Nutzfahrzeug, und ein entsprechendes Betriebsfahren.

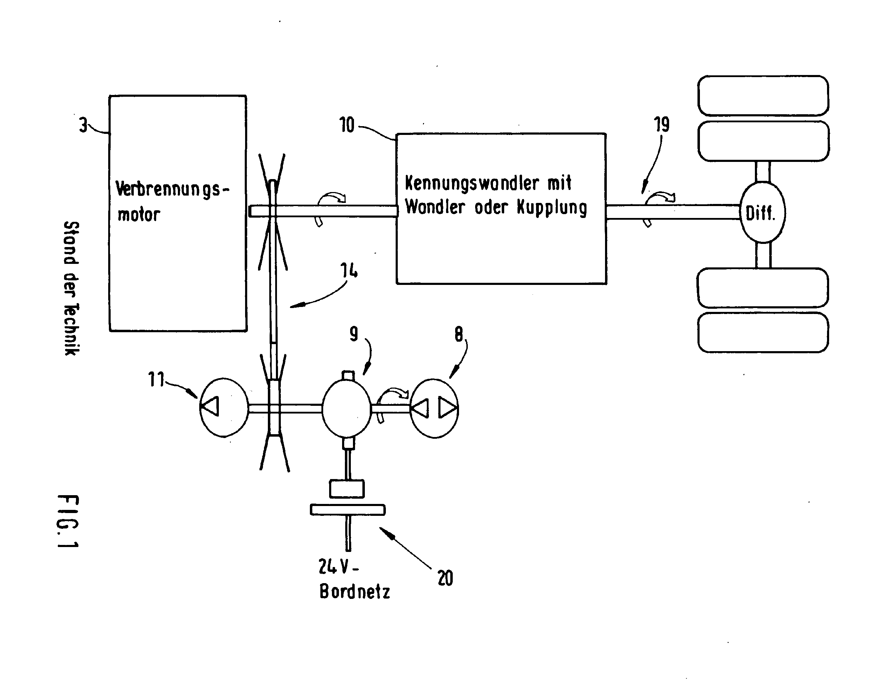

Bei einem wie in Figur 1 gezeigten konventionellen Antrieb wirkt ein Verbrennungsmotor 3 über einen Kennungswandler 10 auf einen Achsantrieb 19 bzw. die Räder. Nebenaggregate wie z.B. eine Lichtmaschine 9, eine Hydraulikpumpe 11 für eine Lenkung und/oder eine Bremsunterstützung und ein Klimakompressor 8 werden über Getriebe, Ketten- oder Riemenantriebe 14 angetrieben. Da üblicherweise der Verbrennungsmotor 3 im Fahrbetrieb dauernd läuft, ist eine kontinuierliche Energieversorgung der Nebenaggregate sicher gestellt. Bei sogenannten Start-Stopp-Systemen muss durch zusätzliche Maßnahmen sicher gestellt werden, dass die sicherheitsrelevanten Systeme wie insbesondere Lenkung und Bremsen kontinuierlich mit Energie weiter versorgt werden können.

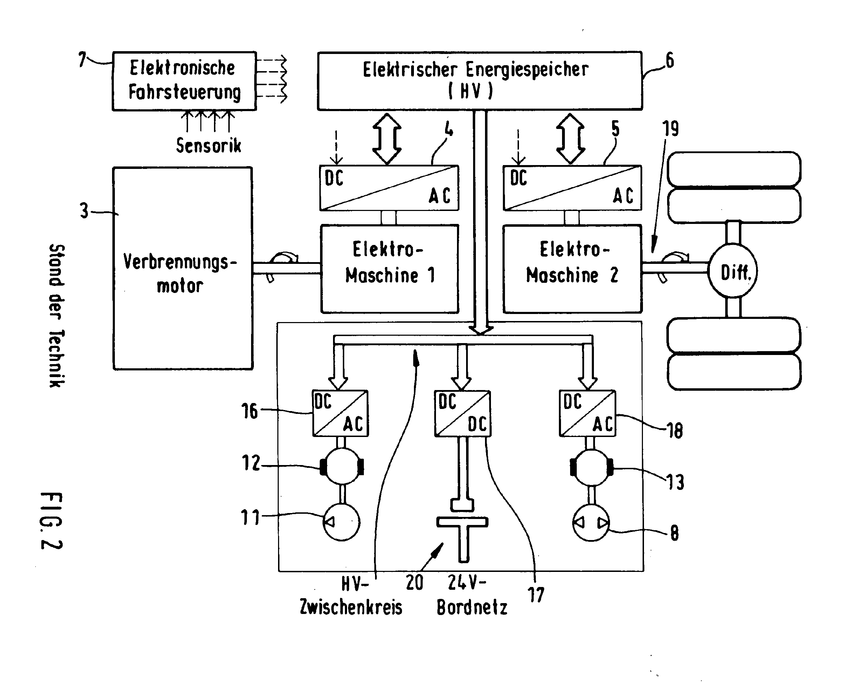

Bei einem konventionellen seriellen Hybridantrieb wie in Figur 2 gezeigt, wird die Leistung des Verbrennungsmotors 3 mit einer generatorisch betriebenen Elektromaschine 1 und einem Umrichter 4 in elektrische Energie umgeformt. Diese Energie wird je nach Fahrsituation entweder in einem elektrischen Energiespeicher 6 abgespeichert oder über einen weiteren Umrichter 5 einer weiteren Elektromaschine 2 zugeführt. Diese weitere Elektromaschine 2 treibt über den Achsantrieb 19 die Räder an. Beim Bremsen wird rückwärts Bremsenergie in den Energiespeicher 6 rückgespeichert. Die wechselnden Leistungsflüsse werden von einer elektronischen Fahrsteuerung 7 in Abhängigkeit von verschiedenen Parametern und Messwerten so optimiert, dass abhängig von der Fahrsituation optimale Verbrauchs- und/oder Fahrleistungswerte erreicht werden. Dabei kann wegen des vorhandenen elektrischen Energiespeichers 6 insbesondere im Stadtbereich auch rein elektrisch gefahren werden.

In diesem Fall sind der Verbrennungsmotor 3 und die damit starr gekoppelte Elektromaschine 1 ausgeschaltet (Drehzahl null). Um die Nebenaggregate 8, 11 und das elektrische 24V-Bordnetz 20 auch in diesem Zustand weiter mit Energie zu versorgen, sind zusätzliche mechanische, elektrische und elektronische Komponenten vorhanden. Diese werden üblicherweise aus dem Hochvolt-Zwischenkreis bzw. dem elektrischen Energiespeicher 6 über Umrichter 16, 17, 18 und Elektromotoren 12, 13 betrieben bzw. versorgt. Wegen der insbesondere beim Nutzfahrzeug notwendigen hohen Bedarfsleistung für Lenkung, Klimatisierung und 24V-Bordnetzversorgung sind relativ aufwendige und kostenintensive zusätzliche Komponenten erforderlich. Darüber hinaus sind z.B. die Wirkungsgradketten zwischen primärem Leistungserzeuger Verbrennungsmotor 3 und den Nebenaggregaten 8, 11, 20 sehr lang, so dass im Hinblick auf den Kraftstoffverbrauch oder die Effizienz weniger günstige Verhältnisse vorliegen.

Die sich aus vorstehend Genanntem ergebenden Aufgaben können im Wesentlichen mit den Merkmalen der unabhängigen Ansprüche gelöst werden. Die Erfindung ist jedoch nicht auf Ausführungsformen beschränkt, die sämtlich eingangs genannten Probleme oder Nachteile des Standes der Technik beseitigen. Vielmehr beansprucht die Erfindung auch allgemein Schutz für die nachstehend beschriebenen Ausführungsbeispiele.

Die Erfindung umfasst die allgemeine technische Lehre, bei einem Hybridantrieb, der vorzugsweise als serieller Hybridantrieb ausgebildet ist, zwischen einem Verbrennungsmotor und einer Elektromaschine eine vorzugsweise schaltbare Kupplung und/oder einen Abtrieb bzw. Antrieb für zumindest ein Nebenaggregat bereitzustellen.

Erfindungsgemäß wird insbesondere ein Hybridantrieb, vorzugsweise ein serieller Hybridantrieb, für ein Fahrzeug, insbesondere Nutzfahrzeug (z.B. Lastkraftwagen, Omnibus oder dergleichen) bereitgestellt.

Der Hybridantrieb umfasst einen Verbrennungsmotor und zumindest eine Elektromaschine.

Es ist möglich, dass der Verbrennungsmotor und die Elektromaschine, die vorzugsweise generatorisch betreibbar ist, über eine vorzugsweise schaltbare (öffenbare und/oder schließbare) Kupplung miteinander verbindbar und/oder voneinander trennbar sind.

Es ist möglich, dass zwischen der Kupplung und der Elektromaschine ein Abtrieb bzw. Antrieb ausgebildet ist, über den dem zumindest einen Nebenaggregat und/oder der Elektromaschine verbrennungsmotorische Energie bzw. Leistung und/oder elektrische Energie bzw. Leistung zuführbar ist.

Vorzugsweise erstreckt sich zwischen dem Verbrennungsmotor und der Elektromaschine eine Welle, an der die Kupplung ausgebildet ist und/oder an der der Abtrieb (vorzugsweise starr) befestigt ist.

Die Erfindung ermöglicht vorteilhaft einen kostengünstigen Hybridantrieb, z.B. da auf einige im Stand der Technik erforderliche Komponenten verzichtet werden kann. Ferner können insbesondere kostengünstige Standard-Nebenaggregate verwendet werden. Darüber hinaus kann gegenüber herkömmlichen Systemen ein verbesserter Wirkungsgrad insbesondere für das zumindest eine Nebenaggregat erzielt werden. Insbesondere ist es vorteilhaft möglich, das zumindest eine Nebenaggregat auf "kurzem Wege" mit Energie zu versorgen. Außerdem kann auf wenig komplexe Systemtechnik zurückgegriffen werden, was zu einer hohen Zuverlässigkeit führt. Weiter kann, wie weiter unten ausgeführt, ein Start-Stopp-Betrieb des Verbrennungsmotors ohne erhöhte Anlasserbelastung geschaffen werden. Vorteilhaft kann ferner an sich "gewohnte" Servicetechnik für das zumindest eine Nebenaggregat verwendet werden. Auch ist ein kontinuierlicher Betrieb einer Klimaanlage möglich und/oder sind Einschalteffekte vermeidbar.

Um das zumindest eine Nebenaggregat auf möglichst "kurzem Wege" vom Verbrennungsmotor anzutreiben, kann über die Kupplung die Elektromaschine angetrieben werden, an welche das zumindest eine Nebenaggregat vorzugsweise über einen konventionellen mechanischen Antrieb insbesondere starr gekoppelt ist.

Im normalen verbrennungsmotorischen Fahrbetrieb ist die Kupplung geschlossen, wobei der Hybridantrieb dann ein normaler serieller Hybrid ist. Das zumindest eine Nebenaggregat wird wie beim konventionellen Antrieb mit Leistung versorgt.

Bei (rein) elektrischem Fahrbetrieb kann der Verbrennungsmotor mittels der Kupplung getrennt werden und dann über die Motor- bzw. Fahrsteuerung abgeschaltet werden. Vorteilhaft kann die Elektromaschine gleichzeitig weiter laufen, um das zumindest eine Nebenaggregat vorzugsweise unterbrechungsfrei mit Leistung (jetzt) aus einem elektrischen Energiespeicher zu versorgen. Dabei kann die Leistung der Elektromaschine vorteilhaft gezielt auf die Bedarfsleistung des zumindest einen Nebenaggregats mit der Fahrsteuerung optimal eingestellt werden.

Wenn dann vom (rein) elektrischen Fahrbetrieb auf verbrennungsmotorischen Fahrbetrieb umgeschaltet wird, wird (nur) die Kupplung eingeschaltet bzw. geschlossen. Die Elektromaschine kann dann wie ein Anlasser arbeiten und so einen effektiven Start-Stopp-Betrieb des Verbrennungsmotors ermöglichen. Der eigentliche Motoranlasser wird so vorteilhaft nur sehr selten benötigt, z.B. wenn der elektrische Energiespeicher gänzlich oder zumindest großteils leer bzw. schwach ist.

Der Hybridantrieb umfasst vorzugsweise einen elektrischen Energiespeicher zum Speichern elektrischer Energie.

Insbesondere ist es möglich, dass der Elektromaschine und/oder dem elektrischen Energiespeicher über eine geschlossene Kupplung verbrennungsmotorische Energie zuführbar ist, die auf an sich bei seriellen Hybridantrieben übliche Weise in elektrische Energie umgewandelt wird bzw. umgewandelt worden ist. Ferner ist es möglich, dass das zumindest eine Nebenaggregat über eine geschlossene Kupplung und den Abtrieb mit verbrennungsmotorischer Energie versorgbar ist.

Besonders vorteilhaft ist, dass z.B. bei geöffneter Kupplung das zumindest eine Nebenaggregat über den Abtrieb mit elektrischer Energie versorgbar ist und/oder der Verbrennungsmotor und die Elektromaschine voneinander getrennt sind, wobei der Verbrennungsmotor vorzugsweise ausgeschaltet ist oder wird.

Bei einem z.B. verbrennungsmotorischen Fahrbetrieb ist die Kupplung vorzugsweise geschlossen, wobei insbesondere der Hybridantrieb dann als serieller Hybridantrieb wirkt. Ferner kann insbesondere bei einem verbrennungsmotorischen Fahrbetrieb (vorzugsweise über eine geschlossene Kupplung) dem zumindest einen Nebenaggregat und der Elektromaschine verbrennungsmotorische Energie zugeführt werden.

Bei einem elektrischen Fahrbetrieb ist die Kupplung vorzugsweise geöffnet und/oder der Verbrennungsmotor ausgeschaltet.

Es ist möglich, dass wenn (vorzugsweise bei einem insbesondere rein elektrischen Fahrbetrieb) die Kupplung geöffnet ist oder wird und/oder der Verbrennungsmotor abgeschaltet ist oder wird, die Elektromaschine und/oder der elektrische Energiespeicher (insbesondere zugleich bzw. gleichzeitig) so wirkt bzw. weiter wirkt, dass das zumindest eine Nebenaggregat (im Wesentlichen) unterbrechungsfrei mit elektrischer Energie versorgt werden kann.

Vorzugsweise kann, wenn von einem (insbesondere rein) elektrischen Fahrbetrieb auf einen verbrennungsmotorischen Fahrbetrieb gewechselt wird, die Kupplung geschlossen werden und/oder die Elektromaschine als Anlasser wirken, um eine Start-Stopp-Funktion bzw. einen Start-Stop-Betrieb des Verbrennungsmotors zu ermöglichen.

Vorzugsweise sind zumindest zwei der folgenden Teile als integrierte Einheit in einem Gehäuse aufgenommen: die Kupplung, der Abtrieb, die Elektromaschine, ein Umrichter und zumindest ein Nebenaggregat.

Das Gehäuse ist vorzugsweise mit einer Abtriebsglocke des Verbrennungsmotors verbunden.

Es ist möglich, dass die Verbindung zwischen dem zumindest einen Nebenaggregat und dem Abtrieb und/oder der Elektromaschine umrichterfrei ist.

Es ist auch möglich, dass das zumindest eine Nebenaggregat von dem elektrischen Energiespeicher über Elektromaschine und/oder den Abtrieb mit elektrischer Energie versorgbar ist und zwar vorteilhaft in dieser Reihenfolge.

Es ist ferner möglich, dass die Verbindung zwischen dem zumindest einen Nebenaggregat und zumindest einem von Folgenden umrichterfrei ist: dem Abtrieb, der Kupplung, dem Verbrennungsmotor.

Die Elektromaschine kann im Wesentlichen so konstruktiv tonnenförmig ausgebildet werden, dass die Kupplung innenliegend besonders raumsparend integrierbar ist.

Die Elektromaschine ist vorzugsweise generatorisch betreibbar und/oder motorisch betreibbar, um das zumindest eine Nebenaggregat mit elektrischer Energie bzw. Leistung vorzugsweise aus dem elektrischen Energiespeicher zu versorgen und/oder anzutreiben.

Es ist möglich, dass die generatorisch betreibbare Elektromaschine ausgebildet ist, insbesondere um elektrische Energie in den elektrischen Energiespeicher zu speichern und/oder um elektrische Energie an die weitere Elektromaschine weiterzuleiten.

Wie an sich üblich bei seriellen Hybridantrieben kann der Hybridantrieb zusätzlich zu dieser Elektromaschine eine weitere Elektromaschine umfassen. Es ist möglich, dass die weitere Elektromaschine motorisch betreibbar ist, insbesondere um das Fahrzeug bzw. die Antriebsachse des Fahrzeugs anzutreiben. Vorzugsweise ist die Elektromaschine insbesondere über einen Umrichter mit dem elektrischen Energiespeicher verbunden. Ebenso kann die weitere Elektromaschine insbesondere über einen weiteren Umrichter mit dem elektrischen Energiespeicher verbunden sein. Der jeweilige Umrichter ist vorzugsweise zwischen dem elektrischen Energiespeicher und der jeweiligen Elektromaschine ausgebildet.

Es ist möglich, dass die Elektromaschine zu einer Seite hin (über die Kupplung) mit dem Verbrennungsmotor verbindbar ist und/oder zu einer anderen Seite hin (vorzugsweise über den Umrichter) mit dem elektrischen Energiespeicher verbunden ist.

Die weitere Elektromaschine kann zu einer Seite hin (vorzugsweise über den Umrichter) mit dem elektrischen Energiespeicher verbunden sein und/oder zu einer anderen Seite hin mit einem Achsantrieb bzw. geeigneten Teilen eines Antriebsstrangs des Fahrzeugs, um das Fahrzeug anzutreiben.

Vorzugsweise umfasst der Hybridantrieb eine elektronische Fahrsteuerung, z.B. um die Kupplung zu steuern.

Es ist möglich, dass zumindest zwei von Folgenden in Reihe geschaltet sind (vorzugsweise in der angegebenen Reihenfolge): der Verbrennungsmotor, zumindest ein Nebenaggregat, die Elektromaschine, der Umrichter, der elektrische Energiespeicher, der weitere Umrichter, die weitere Elektromaschine, der Achsantrieb bzw. ein geeignetes Teil des Antriebsstrangs des Fahrzeugs.

Die Erfindung umfasst auch ein Betriebsverfahren für einen Hybridantrieb, vorzugsweise einen Hybridantrieb wie hierin beschrieben. Insbesondere sind bei dem Betriebsverfahren der Verbrennungsmotor und die Elektromaschine über eine beispielsweise schaltbare Kupplung miteinander verbindbar, wobei über einen zwischen der Kupplung und der Elektromaschine ausgebildeten Abtrieb bzw. Antrieb zumindest ein Nebenaggregat mit verbrennungsmotorischer Energie bzw. Leistung und/oder elektrischer Energie bzw. Leistung versorgt werden kann. Weitere erfindungsgemäße Schritte des Betriebsverfahrens ergeben sich aus der Beschreibung und den Ansprüchen des Hybridantriebs.

Die oben beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Figur 1: zeigt ein Funktionsschema eines konventionellen Antriebs,
- Figur 2: zeigt ein Funktionsschema eines konventionellen Hybridantriebs,
- Figur 3: zeigt ein Funktionsschema eines Ausführungsbeispiels eines erfindungsgemäßen Hybridantriebs, und
- Figur 4: zeigt ein Funktionsschema eines anderen Ausführungsbeispiels eines erfindungsgemäßen Hybridantriebs.

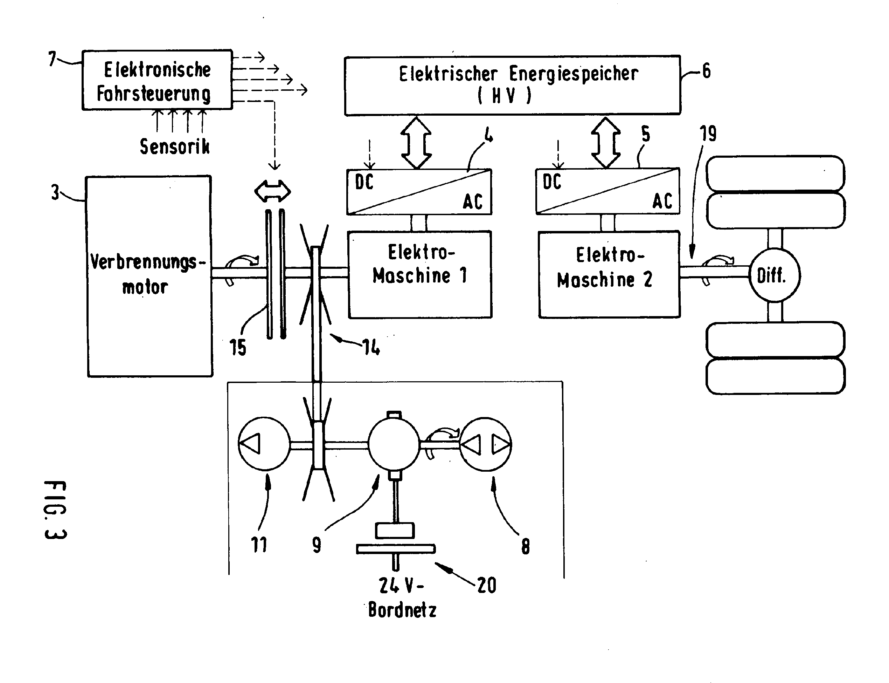

Figur 3 zeigt ein Ausführungsbeispiel eines erfindungsgemäßen seriellen Hybridantriebs. Der Hybridantrieb umfasst einen Verbrennungsmotor 3 und eine Elektromaschine 1, die generatorisch betreibbar ist. Der Verbrennungsmotor 3 und die Elektromaschine 1 sind über eine Schaltkupplung 15 miteinander verbindbar. Zwischen der Schaltkupplung 15 und der Elektromaschine 1 ist ein Ab- bzw. Antrieb 14 ausgebildet, über den Nebenaggregate wie etwa eine hydraulische Lenkpumpe 11, eine Lichtmaschine 9 und ein Klimakompressor 8 mit verbrennungsmotorischer oder elektrischer Energie bzw. Leistung versorgbar sind. Vorzugsweise ist die Schaltkupplung 15 an einer sich zwischen dem Verbrennungsmotor 3 und der Elektromaschine 1 erstreckenden Welle ausgebildet, an der der Abtrieb 14 insbesondere starr befestigt sein kann.

Die Elektromaschine 1 ist über einen Umrichter 4 mit einem elektrischen Energiespeicher 6 verbunden. Der Hybridantrieb umfasst ferner eine weitere Elektromaschine 2, die motorisch betreibbar ist. Die weitere Elektromaschine 2 ist einerseits über einen weiteren Umrichter 5 mit dem elektrischen Energiespeicher 6 und andererseits mit einem Achsantrieb 19 verbunden, um das Fahrzeug anzutreiben. Der Hybridantrieb umfasst ferner eine elektronische Fahrsteuerung 7 mitunter zur Steuerung der schaltbaren Kupplung 15.

Bei dem in Figur 3 gezeigten seriellen Hybridantrieb wird die Leistung des Verbrennungsmotors 3 mit der generatorisch betreibbaren Elektromaschine 1 und dem Umrichter 4 in elektrische Energie umgeformt. Diese Energie wird je nach Fahrsituation entweder in dem elektrischen Energiespeicher 6 abgespeichert oder über den weiteren Umrichter 5 der weiteren Elektromaschine 2 zugeführt. Die weitere Elektromaschine 2 treibt über den Achsantrieb 19 die Räder an. Beim Bremsen wird rückwärts Bremsenergie in den Energiespeicher 6 rückgespeichert. Die wechselnden Leistungsflüsse werden von der elektronischen Fahrsteuerung 7 in Abhängigkeit von verschiedenen Parametern und Messwerten so optimiert, dass abhängig von der Fahrsituation optimale Verbrauchs- und/oder Fahrleistungswerte erreicht werden. Dabei kann wegen des vorhandenen elektrischen Energiespeichers 6 insbesondere im Stadtbereich auch rein elektrisch gefahren werden.

Wenn die Kupplung 15 geschlossen ist, was insbesondere im verbrennungsmotorischen Fahrbetrieb der Fall ist, kann der Elektromaschine 1 und dem elektrischen Energiespeicher 6 verbrennungsmotorische Energie zugeführt werden, die entsprechend in elektrische Energie umgewandelt wird bzw. umgewandelt worden ist. Ebenso kann den Nebenaggregaten 8, 9, 11 verbrennungsmotorische Energie zugeführt werden. Die Verbindung zwischen den Nebenaggregaten 8, 9, 11 und dem Abtrieb 14, der Kupplung 15 und dem Verbrennungsmotor 3 ist umrichterfrei.

Wenn die Kupplung 15 geöffnet ist, ist der Verbrennungsmotor 3 von den nachgeschalteten Funktionseinheiten wie etwa der Elektromaschine 1, den Nebenaggregaten 8, 9, 11 und/oder dem Energiespeicher 6 getrennt.

Wie in Figur 3 gesehen werden kann, kann bei vorzugsweise geöffneter Kupplung und insbesondere ausgeschaltetem Verbrennungsmotor 3 den Nebenaggregaten 8, 9, 11 von dem elektrischen Energiespeicher 6, über den Umrichter 4, die Elektromaschine 1 und den Abtrieb 14 elektrische Energie zugeführt werden oder allgemein ermöglicht werden, dass die die Nebenaggregate 8, 9, 11 mit elektrischer Energie versorgt bzw. angetrieben werden. Die Elektromaschine 1 ist somit einerseits generatorisch betreibbar und anderseits motorisch betreibbar, um die Nebenaggregate 8, 9, 11 mit elektrischer Energie bzw. Leistung aus dem elektrischen Energiespeicher 6 zu versorgen bzw. anzutreiben.

Die Verbindung zwischen den Nebenaggregaten 8, 9, 11 und dem Abtrieb 14 und der Elektromaschine 1 ist umrichterfrei.

Besonders vorteilhaft kann, wenn bei einem rein elektrischen Fahrbetrieb die Kupplung 15 geöffnet wird und vorzugsweise der Verbrennungsmotor 3 abgeschaltet wird, die Elektromaschine 1 bzw. der elektrische Energiespeicher 6 gleichzeitig so weiter wirken, dass die Nebenaggregate 8, 9, 11 unterbrechungsfrei mit elektrische Energie versorgt werden.

Weiter besonders vorteilhaft ist, dass wenn die Kupplung 15 geschlossen wird und insbesondere von einem rein elektrischen Fahrbetrieb auf einen verbrennungsmotorischen Fahrbetrieb gewechselt wird, die Elektromaschine 1 als Anlasser wirken kann, um eine Start-Stopp-Funktion des Verbrennungsmotors 3 zu ermöglichen, wodurch der eigentliche Motoranlasser nur sehr selten benötigt wird, z.B. wenn der elektrische Energiespeicher 6 leer.

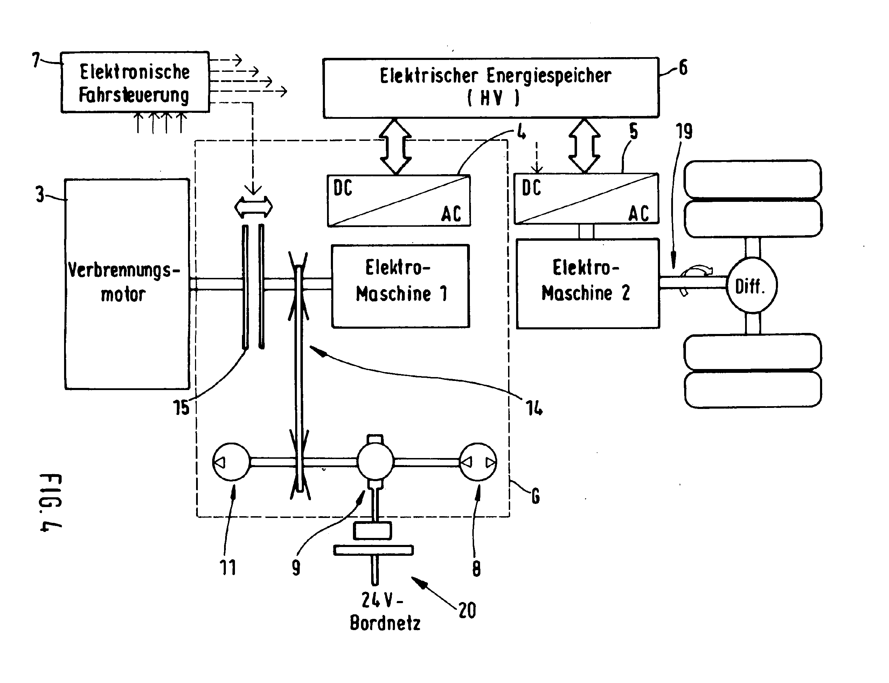

Die Ausführungsform gemäß Figur 4 stimmt teilweise mit der vorstehend beschriebenen Ausführungsform überein, wobei ähnliche oder identische Teile mit dem gleichen Bezugszeichen versehen sind, und zu deren Erläuterung auch auf die Beschreibung der vorstehend beschriebenen Ausführungsform verwiesen wird, um Wiederholungen zu vermeiden.

Eine Besonderheit der in Figur 4 gezeigten Ausführungsform ist das Gehäuse G, wobei die Kupplung 15, der Abtrieb 14, die Elektromaschine 1, die Nebenaggregate 8, 9, 11 und der Umrichter 4 als integrierte Einheit in dem Gehäuse G aufgenommen sind. Das Gehäuse G ist mit einer Abtriebsglocke (nicht gezeigt) des Verbrennungsmotors 3 verbunden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere sind die Gegenstände der Unteransprüche auch unabhängig von den Merkmalen der vorangegangenen und in Bezug genommenen Ansprüche realisierbar.

## Patentansprüche

1. Hybridantrieb, vorzugsweise serieller Hybridantrieb, für ein Fahrzeug, insbesondere Nutzfahrzeug, wobei der Hybridantrieb einen Verbrennungsmotor (3) und eine Elektromaschine (1) umfasst, **dadurch gekennzeichnet, dass** der Verbrennungsmotor (3) und die Elektromaschine (1) über eine Kupplung (15) miteinander verbindbar und/oder voneinander trennbar sind und zwischen der Kupplung (15) und der Elektromaschine (1) ein Abtrieb (14) ausgebildet ist, über den verbrennungsmotorische und/oder elektrische Energie zumindest einem Nebenaggregat (11) zuführbar ist.

2. Hybridantrieb nach Anspruch 1, **dadurch gekennzeichnet, dass**
a) der Elektromaschine (1) und/oder einem elektrischen Energiespeicher (6) über eine geschlossene Kupplung (15) verbrennungsmotorische Energie zuführbar ist, und/oder
b) dem zumindest einen Nebenaggregat (8, 9, 11) über eine geschlossene Kupplung (15) und den Abtrieb (14) verbrennungsmotorische Energie zuführbar ist.

3. Hybridantrieb nach Anspruch 1 oder 2, **dadurch gekennzeichnet, dass** bei geöffneter Kupplung (15)
- dem zumindest einen Nebenaggregat (8, 9, 11) über den Abtrieb (14) und/oder der Elektromaschine (1) elektrische Energie zuführbar ist, und/oder
- der Verbrennungsmotor (3) und die Elektromaschine (1) voneinander getrennt sind, und/oder
- der Verbrennungsmotor (3) ausgeschaltet ist oder wird.

4. Hybridantrieb nach einem der vorhergehenden Ansprüche, **dadurch gekennzeichnet, dass** bei einem verbrennungsmotorischen Fahrbetrieb
- die Kupplung (15) geschlossen ist, und/oder
- der Hybridantrieb als serieller Hybridantrieb wirkt, und/oder
- dem zumindest einen Nebenaggregat (8, 9, 11) verbrennungsmotorische Energie zugeführt wird, und/oder
- der Elektromaschine (1) verbrennungsmotorische Energie zugeführt wird.

5. Hybridantrieb nach einem der vorhergehenden Ansprüche, **dadurch gekennzeichnet, dass**
- wenn, vorzugsweise bei einem elektrischen Fahrbetrieb, die Kupplung (15) geöffnet ist oder wird und/oder der Verbrennungsmotor (3) abgeschaltet ist oder wird, und/oder
- wenn von einem verbrennungsmotorischen Fahrbetrieb auf einen elektrischen Fahrbetrieb gewechselt wird,
- die Elektromaschine (1) und/oder ein elektrischer Energiespeicher (6) so weiter wirkt, dass dem zumindest einen Nebenaggregat (8, 9, 11) im Wesentlichen unterbrechungsfrei elektrische Energie zuführbar ist.

6. Hybridantrieb nach einem der vorhergehenden Ansprüche, **dadurch gekennzeichnet, dass** wenn von einem elektrischen Fahrbetrieb auf einen verbrennungsmotorischen Fahrbetrieb gewechselt wird,
- die Kupplung (15) geschlossen wird, und/oder
- die Elektromaschine (1) als Anlasser wirkt, um eine Start-Stopp-Funktion des Verbrennungsmotors (3) zu ermöglichen.

7. Hybridantrieb nach einem der vorhergehenden Ansprüche, **dadurch gekennzeichnet, dass** die Kupplung (15), der Abtrieb (14), die Elektromaschine (1), das zumindest eine Nebenaggregat (8, 9, 11) und/oder zumindest ein Umrichter (4) als integrierte Einheit in einem Gehäuse (G) aufgenommen sind und/oder das Gehäuse (G) mit einer Abtriebsglocke des Verbrennungsmotors (3) verbunden ist.

8. Hybridantrieb nach einem der vorhergehenden Ansprüche, **dadurch gekennzeichnet, dass**
- die Verbindung zwischen dem zumindest einen Nebenaggregat (8, 9, 11) und dem Abtrieb (14) und/oder der Elektromaschine (1) umrichterfrei ist, und/oder
- dem zumindest einen Nebenaggregat (8, 9, 11) von einem elektrischen Energiespeicher (6) über einen Umrichter (4) und/oder die Elektromaschine (1) und/oder den Abtrieb (14) elektrische Energie zuführbar ist.

9. Hybridantrieb nach einem der vorhergehenden Ansprüche, **dadurch gekennzeichnet, dass** die Verbindung zwischen dem zumindest einen Nebenaggregat (8, 9, 11) und zumindest einem von Folgenden umrichterfrei ist: Abtrieb (14), Kupplung (15), Verbrennungsmotor (3).

10. Hybridantrieb nach einem der vorhergehenden Ansprüche, **dadurch gekennzeichnet, dass** die Elektromaschine (1) im Wesentlichen tonnenförmig ausgebildet ist.

11. Hybridantrieb nach einem der vorhergehenden Ansprüche, **dadurch gekennzeichnet, dass**
- die Elektromaschine (1) generatorisch betreibbar ist und/oder betreibbar ist, um dem zumindest einen Nebenaggregat (8, 9, 11) elektrische Energie aus einem elektrischen Energiespeicher (6) zuzuführen und/oder um zumindest ein Nebenaggregat (11) mit elektrischer Energie aus einem elektrischen Energiespeicher (6) anzutreiben, und/oder
- der Hybridantrieb eine weitere Elektromaschine (2) umfasst, die motorisch betreibbar ist, um das Fahrzeug anzutreiben.

12. Betriebsverfahren für einen Hybridantrieb für ein Fahrzeug, insbesondere Nutzfahrzeug, vorzugsweise für einen Hybridantrieb nach einem der vorhergehenden Ansprüche, wobei der Hybridantrieb einen Verbrennungsmotor (3) und eine Elektromaschine (1) umfasst, **dadurch gekennzeichnet, dass** der Verbrennungsmotor (3) und die Elektromaschine (1) über eine Kupplung (15) miteinander verbindbar und/oder voneinander trennbar sind und über einen zwischen der Kupplung (15) und der Elektromaschine (1) ausgebildeten Abtrieb (14) zumindest einem Nebenaggregat (8, 9, 11) verbrennungsmotorische und/oder elektrische Energie zugeführt wird.

13. Betriebsverfahren nach Anspruch 12, **dadurch gekennzeichnet, dass**
- wenn, vorzugsweise bei einem elektrischen Fahrbetrieb, die Kupplung (15) geöffnet ist oder wird und/oder der Verbrennungsmotor (3) abgeschaltet ist oder wird, und/oder
- wenn von einem verbrennungsmotorischen Fahrbetrieb auf einen elektrischen Fahrbetrieb gewechselt wird,
- die Elektromaschine (1) und/oder zumindest ein elektrischer Energiespeicher (6) so weiter wirkt, dass das zumindest eine Nebenaggregat (8, 9, 11) im Wesentlichen unterbrechungsfrei mit elektrischer Energie versorgt wird.

14. Betriebsverfahren nach einem der Ansprüche 12 oder 13, wobei wenn von einem elektrischen Fahrbetrieb auf einen verbrennungsmotorischen Fahrbetrieb gewechselt wird,
- die Kupplung (15) geschlossen wird, und/oder
- die Elektromaschine (1) als Anlasser wirkt, um eine Start-Stopp-Funktion des Verbrennungsmotors (3) zu ermöglichen.
